# EUROPEAN PATENT SPECIFICATION

(11) **EP 1 699 691 B1**
(45) Date of publication and mention of the grant of the patent: **07.12.2016**
(21) Application number: 04804428.3
(22) Date of filing: 30.12.2004
(51) Int. Cl.: B64D 13/08

(54) **METHOD AND DEVICE FOR AIR-CONDITIONING AIRCRAFT CABINS**
VERFAHREN UND VORRICHTUNG ZUR LUFTKLIMATISIERUNG VON FLUGZEUGKABINEN
PROCEDE ET DISPOSITIF DE CLIMATISATION DE CABINES D'AERONEFS

(30) Priority: 30.12.2003 DE 10361654
(43) Date of publication of application: 13.09.2006
(73) Proprietor: Airbus Operations GmbH, 21129 Hamburg (DE)
(72) Inventor: LERCHE, Thomas, 21635 Jork (DE)
(74) Representative: Beyer, Andreas
(86) International application number: PCT/EP2004/014843
(87) International publication number: WO 2005/068293

(56) References cited:
- GB-A- 954 342
- US-A- 5 545 084
- US-A- 5 556 335
- US-A- 5 755 378

## Description

The invention relates to a method and a device for air-conditioning aircraft cabins.

It is established practice in the current state of technology to air-condition aircraft cabins, eg. by means of mixed air, whereby the mixed air is made up of re-circulated air (ie., air taken out of the cabin), fresh air (heated, if so required) and engine bleed air. The mixing takes place in accordance with the air-conditioning requirement. The term "air-conditioning" within this context should not just be understood in the narrower sense as setting the ratio of air humidity to air temperature, but rather also in the sense of setting the relevant parameters for the air injected into the cabin, and in particular the temperature of the same. The term "cabin" in the sense of this application does not just mean the actual passenger cabin, but also other areas of the aircraft, in particular lounge and work areas.

When air-conditioning aircraft cabins, widely differing operational and environmental conditions must be taken into consideration. For example, the environmental conditions during operation of the aircraft on the ground differ very strongly to the environmental conditions during a flight. Dependent upon the operational conditions, greatly varying heat balances occur. As a result of the operational and environmental conditions, which to a certain extent are widely varying, highly pronounced transient heating and cooling processes occur, ie. regulation of the air-conditioning must take place at the time of fast-changing conditions. Associated with the varying operational conditions are strongly varying heat loads which need to be supplied to the cabin areas, ie. as a result of changing seat densities etc.

As a result of these changing operational and environmental conditions, the temperatures of the air flow injected into the cabin are regulated differently. This type of regulation is established by the current state of technology. For example, the composition of recirculated air, fresh air and hot engine bleed air can be set so that the air-conditioning air injected into the cabin is of a required temperature. If being heated, this required temperature is above the specified average temperature measured or accepted in the cabin, and if being cooled, it is lower than this.

Air-conditioning units for aircraft must be optimised both with regard to their weight and with regard to the space which they take up. This means that the air outlets through which the air jets injected into the cabin emerge generally have a very small flow cross-section. It is generally necessary for them to be positioned in the upper section of the cabin panelling. This means that ventilation of the cabin areas is by means of so-called free jets which set all of the air in the cabin in motion, and in this way create so-called advection rolls.

GB 954,342 discloses an aircraft having overhead and floor vents.

US 5,545,084 discloses an aircraft having several different fixed air vents.

US 5,556,335 discloses a diffuser having a deflector plate which is axially movable with respect to an air outlet. A temperature sensitive mechanism causes axial movement of the deflector plate according to a temperature of the airflow.

However, the prior art fails to disclose an efficient, lightweight, and versatile means of controlling an airflow introduced into an aircraft.

It is well known that the characteristics of these free jets which are directed into the cabin are very strongly influenced by impetus buoyant forces.

Air-conditioning units for aircraft in accordance with the current state of technology are generally such that they are optimised for the typical operational and environmental conditions during the flight, ie. the injection characteristics of the air jets injected into the cabin, ie. in particular their directions and their impulses (flow speeds) are chosen in such a way that the highest possible level of thermal comfort is offered to passengers during a flight. This of course means that if the operational and environmental conditions deviate from the specified flight conditions, the thermal comfort in the cabin can sometimes no longer be achieved in the required way.

The aim of the invention is to provide a method and a device for air-conditioning aircraft cabins with which a high level of thermal comfort can be offered to the passengers or the flight personnel, even with changing operational and environmental conditions.

For this purpose, the method in accordance with the invention for the air-conditioning of aircraft cabins proposes that an air jet is directed into the cabin, whereby the direction of the air jet is changed dependent upon a temperature measured. The "impulse" of the air jet is to be understood as the flow impulse of the same. A measurement for the impulse of the air jet is, e.g. the flow speed of the same at the output point of the device (e.g. a nozzle or a pipe), with which the air jet is produced and injected into the cabin.

In accordance with a preferred version of the invention, the temperature of the air jet itself is measured in order to deduce the control parameters for setting the direction of the air jet. A prerequisite of this is that the air-conditioning unit of the aircraft has a computer-controlled regulator of an established type. In this way, the actual temperature is measured at an appropriate point within the cabin to be air-conditioned, and the mixed air described is tempered by the aforementioned regulation equipment so that the average temperature in the cabin or the temperature directly in the area where the passengers are located is changed from the actual value to a required optimum value. To correspond with this regulation, the air injected into the cabin is therefore either heated up or cooled down to a specific temperature value. If the cabin is, eg. to the heated up, the temperature of the air jet has a higher value than the aforementioned air which is measured in the cabin. In accordance with the example specified above, this air-jet temperature is therefore determined in order to set the direction and/or the impulse of the air jet. This air-jet temperature is indeed a measure for the state of the air-conditioning in which the system finds itself.

If, for example, as a result of the pre-specified regulation equipment for the air-conditioning unit, the air jet has a relatively high temperature, this means that the cabin requires relatively significant heating up. In such a case, the direction of the air jet injected into the cabin in accordance with a preferred example of the invention, is to be set at a lower point in relation to a vertical.

In accordance with another preferred version of the method in accordance with the invention, as the temperature of the air jet increases, the impulse (flow speed) of the same is also increased.

The invention also shows a device for the air-conditioning of aircraft cabins with means for producing and directing at least one air jet which is introduced into the cabin, and a device for detecting a temperature, whereby means are provided for changing the direction of the air jet dependent upon the temperature measured.

With this, the means for changing the direction of the air jet have a component, the form of which depends upon temperature. This component is positioned in such a way that it directly detects the temperature of the air jet before the same enters into the cabin.

In accordance with another preferred version of the invention, the component with temperature-dependent form specified here is a so-called passive sensor and actuator element, ie. the component preferably performs its functions without any external energy supply (apart from the air flow which brings about the temperature change). For example, the component can include a shape memory alloy or else a bi-metallic material. The component with temperature-dependent form is thus incorporated into the means for changing the direction of the air jet so that it has the required effect dependent upon the specified temperature measured. With the component of temperature-dependent form, it is
possible to set the direction of a nozzle or of a pipe in a simple manner, dependent upon the temperature of the component. Also dependent upon the temperature of the component with temperature-dependent form, a flow cross-section can be set for the nozzle or the pipe, if so required by mechanical means. With the above-specified preferred version of the invention, the aforementioned target of low weight and low space requirement is achieved in particular.

These preferred variations of the invention also make it possible, in a simple way, to equip already existing aircraft with the air-conditioning units specified.

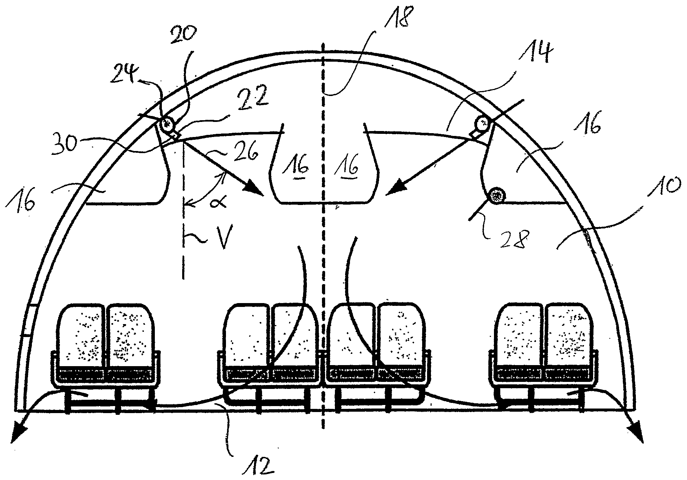

In the following, an example of the invention is described in greater detail with reference to the drawing.

The figure schematically shows a section through an aircraft cabin 10. The passenger seats are erected across the floor 12 of the cabin. At ceiling level 14 of the cabin, luggage lockers 16 are arranged in the established way.

Air-conditioning of the cabin 10 is carried-out symmetrically in relation to a central axis 18.

An air-jet 26 is directed into the cabin with a variable injection angle a. The air jet 26 arrow shows the direction of the air-jet chosen for the current environmental and operational conditions. In order to compensate for the effects which arise with free jets and caused by impetus, the direction, and if so required, the impulse (flow speed) of the injected air flow 26 is automatically adapted dependent upon a temperature measured.

A prerequisite of this is that an air-conditioning unit in accordance with the current state of technology is provided for the cabin 10. This air-conditioning unit regulates the temperature of the air flow 26 injected via a nozzle or a guide pipe 22. Due to the regulation specified, the injected air at the output of the nozzle or the guide pipe 22 is of a temperature pre-specified by the regulation unit. This temperature can be reached, for example, by mixing recirculated air from the cabin, heated fresh air, and if so required, hot engine bleed air. A temperature sensor 28 in the cabin is used with this established type of regulation.

On the other hand, a temperature sensor 30 directly measures the temperature of the air jet 26 injected into the cabin 10. Dependent upon this temperature measured, the angle a of the air jet in relation to a vertical V is set automatically. The vertical V runs parallel to the symmetrical level 18 of the cabin.

The higher the temperature measured by the sensor 30, the smaller the angle a set, ie. the air jet is correspondingly directed more steeply into the cabin. If the temperature measured by the sensor 30 is eg. 25°, ie. the cabin is to be heated up due to the environmental and operational conditions, the angle a can be within the range of from 10°C to 30°C. If the temperature measured by the sensor 30 is eg. 15°C, ie. the cabin requires cooling down slightly, the angle a can be within the range of from 45° to 60°C. If the temperature measured with the sensor 30 is eg. 9°C, ie. the cabin needs to be cooled down significantly, the angle a is close to 90°C, eg. in the range of from 75°C to 90°C.

The automatic adaptation of the angle a to the operational conditions can preferably be brought about by changing the injection speed, ie. the impulse of the air jet 26. An impulse increase can be implemented eg. in a simple way whereby the cross-section through which the air emerges from the guide pipe or an air outlet channel, is reduced. Because the way the air passes through the blower is essentially controlled, a narrowing of the cross-section at the outlet leads to increased flow speed and an increased air flow impulse. The increased impulse means that the depth to which the free jet penetrates into the cabin is increased. Overall, with these measures it is possible to achieve better flow topology within the cabin. During constant flight, which is the norm, only relatively low flow speeds are required for the air jet, and so draughts can be avoided.

The direction (angle a) of the air jet and the impulse is set very easily by means of a component which serves both as a sensor and as an actuator (activator). Suitable for this are, eg. components made from an established type of shape memory alloy, or else, in simple cases, bi-metallic materials. Such components change their form with the temperature, and this change in form can be brought about mechanically by changing direction or also changing the cross-section at the end of the outlet channel. For example, a component with a shape memory alloy or else a bi-metallic component can activate a rotation device 20 mechanically with which the guide pipe 22 is rotated around the axis 24 so that the angle a changes.

## Claims

1. Method for air-conditioning of aircraft cabins, wherein, by means of at least one blower, at least one air jet (26) is directed into the cabin (10) through a guide pipe (22), and a temperature sensor (30) having a temperature-dependent form detects an air jet temperature, the method **characterized by** comprising the step of:
rotating a rotation device (20) adapted for rotating the guide pipe (22) according to a change in form of the temperature sensor (30) to alter an angle of the air jet (26) with respect to a vertical direction.

2. Method in accordance with claim 1,
**characterized in that** the air jet (26) is directed into the cabin (10) from the ceiling area (14).

3. Method in accordance with claim 1,
**characterized in that**, as the temperature of the air jet (26) rises, its angle (α) with the vertical (V) is made smaller.

4. Method in accordance with claim 1,
**characterized in that**, as the temperature of the air jet (26) rises, its impulse is increased.

5. Method in accordance with any one of claims 1 to 4, **characterized in that** the angle of the air jet (26) is continuously variable from 10 degrees to 90 degrees.

6. Device for air-conditioning aircraft cabins (10), comprising:
means (20, 22) for generating and directing at least one air jet (26) into the aircraft cabin (10) through a guide pipe (22),
a temperature sensor (30) for detecting an air jet temperature and having a temperature-dependent form,
**characterized by** further comprising a rotation device (20) adapted to, according to a change in form of the temperature sensor (30), alter an angle of the air jet (26) with respect to the vertical direction.

7. Device in accordance with claim 6,
**characterized in that**, as the temperature of the air jet (26) rises, its angle (α) with the vertical (V) is made smaller.

8. Device in accordance with claim 7,
**characterized in that** the temperature sensor (30) having a temperature-dependent form includes a shape memory alloy.

9. Device in accordance with claim 7,
**characterized in that** the temperature sensor (30) having a temperature-dependent form has a bi-metallic element.

10. Device in accordance with claim 6,
**characterized in that** the temperature sensor (30) is positioned so as to measure the temperature of the air jet (26).

11. Device in accordance with one of claims 6 to 10, wherein the angle of the air jet (26) is continuously variable from 10 degrees to 90 degrees.

## Patentansprüche

1. Verfahren zum Klimatisieren von Flugzeugkabinen, bei dem mittels zumindest eines Gebläses durch ein Lenkrohr (22) mindestens ein Luftstrahl (26) in die Kabine (10) gerichtet wird und ein Temperatursensor (30) mit temperaturabhängiger Form eine Luftstrahltemperatur misst, wobei das Verfahren **dadurch gekennzeichnet ist, dass** es den Schritt umfasst:
Drehen einer Drehvorrichtung (20), die dazu eingerichtet ist, das Lenkrohr (22) gemäß einer Änderung der Form des Temperatursensors (30) zu drehen, um einen Winkel des Luftstrahles (26) bezüglich einer vertikalen Richtung zu ändern.

2. Verfahren nach Anspruch 1,
**dadurch gekennzeichnet, dass** der Luftstrahl (26) aus dem Deckenbereich (14) in die Kabine (10) gerichtet ist.

3. Verfahren nach Anspruch 1,
**dadurch gekennzeichnet, dass** mit zunehmender Temperatur des Luftstrahles (26) sein Winkel (α) zur Vertikalen (V) verkleinert wird.

4. Verfahren nach einem der Ansprüche 1 bis 3,
**dadurch gekennzeichnet, dass** mit zunehmender Temperatur des Luftstrahles (26) sein Impuls vergrößert wird.

5. Verfahren nach einem der Ansprüche 1 bis 4,
**dadurch gekennzeichnet, dass** der Winkel des Luftstrahles (26) von 10 Grad bis 90 Grad kontinuierlich variabel ist.

6. Vorrichtung zum Klimatisieren von Flugzeugkabinen (10), umfassend:
Mittel (20, 22) zum Erzeugen und Richten zumindest eines Luftstrahles (26) in die Flugzeugkabine (10) durch ein Lenkrohr (22),
einen Temperatursensor (30) zum Messen einer Luftstrahltemperatur mit temperaturabhängiger Form,
**dadurch gekennzeichnet, dass** sie ferner eine Drehvorrichtung (20) umfasst, die dazu eingerichtet ist, gemäß einer Änderung der Form des Temperatursensors (30) einen Winkel des Luftstrahles (26) bezüglich einer vertikalen Richtung zu ändern.

7. Vorrichtung nach Anspruch 6,
**dadurch gekennzeichnet, dass** mit zunehmender Temperatur des Luftstrahles (26) sein Winkel (α) zur Vertikalen (V) verkleinert wird.

8. Vorrichtung nach Anspruch 7,
**dadurch gekennzeichnet, dass** der Temperatursensor (30) mit temperaturabhängiger Form eine Formgedächtnislegierung aufweist.

9. Vorrichtung nach Anspruch 7,
**dadurch gekennzeichnet, dass** der Temperatursensor (30) mit temperaturabhängiger Form ein Bimetallelement aufweist.

10. Vorrichtung nach Anspruch 6,
**dadurch gekennzeichnet, dass** der Temperatursensor (30) so angeordnet ist, dass er die Temperatur des Luftstrahles (26) misst.

11. Vorrichtung nach einem der Ansprüche 6 bis 10,
**dadurch gekennzeichnet, dass** der Winkel des Luftstrahles (26) von 10 Grad bis 90 Grad kontinuierlich variabel ist.

## Revendications

1. Procédé de climatisation pour cabine d'aéronef, dans lequel, au moyen d'au moins d'une soufflerie, au moins un jet d'air (26) est dirigé dans la cabine (10) à travers un tuyau de guidage (22), et un capteur de température (30) ayant une forme dépendant de la température détecte une température du jet d'air, le procédé étant **caractérisé en ce qu'**il comprend l'étape consistant à :
faire tourner un dispositif de rotation (20) adapté pour faire tourner le tuyau de guidage (22) conformément à un changement de la forme du capteur de température (30) pour altérer un angle du jet d'air (26) par rapport à une direction verticale.

2. Procédé selon la revendication 1,
**caractérisé en ce que** le jet d'air (26) est dirigé dans la cabine (10) depuis la zone de plafond (14).

3. Procédé selon la revendication 1,
**caractérisé en ce que**, à mesure que la température du jet d'air (26) s'élève, son angle (α) avec la verticale (V) diminue.

4. Procédé selon la revendication 1,
**caractérisé en ce que**, à mesure que la température du jet d'air (26) s'élève, son impulsion augmente.

5. Procédé selon l'une quelconque des revendications 1 à 4,
**caractérisé en ce que** l'angle du jet d'air (26) varie de manière continue de 10 degrés à 90 degrés.

6. Dispositif de climatisation pour cabine d'aéronef (10), comprenant :
un moyen (20, 22) destiné à générer et à diriger au moins un jet d'air (26) dans la cabine d'aéronef (10) à travers un tuyau de guidage (22),
un capteur de température (30) destiné à détecter une température du jet d'air et ayant une forme dépendant de la température,
**caractérisé en ce qu'**il comprend en outre un dispositif de rotation (20) adapté pour, conformément à un changement de la forme du capteur de température (30), altérer un angle du jet d'air (26) par rapport à la direction verticale.

7. Dispositif selon la revendication 6,
**caractérisé en ce que**, à mesure que la température du jet d'air (26) s'élève, son angle (α) avec la verticale (V) diminue.

8. Dispositif selon la revendication 7,
**caractérisé en ce que** le capteur de température (30) présentant une forme dépendant de la température comprend un alliage à mémoire de forme.

9. Dispositif selon la revendication 7,
**caractérisé en ce que** le capteur de température (30) ayant une forme dépendant de la température comporte un élément bimétallique.

10. Dispositif selon la revendication 6,
**caractérisé en ce que** le capteur de température (30) est positionné de façon à mesurer la température du jet d'air (26).

11. Dispositif selon l'une quelconque des revendications 6 à 10, dans lequel l'angle du jet d'air (26) varie de manière continue de 10 degrés à 90 degrés.
